# EUROPEAN PATENT SPECIFICATION

(11) **EP 4 562 880 B1**
(45) Date of publication and mention of the grant of the patent: **26.08.2026**
(21) Application number: 23860822.8
(22) Date of filing: 29.08.2023
(51) Int. Cl.: H04L 9/30, H04L 9/32, H04W 12/04, H04W 12/69, H04W 48/10, H04W 48/18, H04W 12/041, H04W 12/106

(54) **METHOD AND APPARATUS FOR SUPPORTING IDENTITY-BASED CRYPTOGRAPHY FOR SIGNALLING MESSAGE PROTECTION IN A WIRELESS COMMUNICATION SYSTEM**
VERFAHREN UND VORRICHTUNG ZUR UNTERSTÜTZUNG VON IDENTITÄTSBASIERTER KRYPTOGRAPHIE ZUM SCHUTZ VON SIGNALISIERUNGSNACHRICHTEN IN EINEM DRAHTLOSEN KOMMUNIKATIONSSYSTEM
PROCÉDÉ ET APPAREIL DESTINÉS À PRENDRE EN CHARGE UNE CRYPTOGRAPHIE BASÉE SUR L'IDENTITÉ À DES FINS DE PROTECTION D'UN MESSAGE DE SIGNALISATION DANS UN SYSTÈME DE COMMUNICATION SANS FIL

(30) Priority: 01.09.2022 IN 202241050089; 14.08.2023 IN 202241050089
(43) Date of publication of application: 04.06.2025
(73) Proprietor: Samsung Electronics Co., Ltd., Suwon-si, Gyeonggi-do 16677 (KR)
(72) Inventor: RAJADURAI, Rajavelsamy, Bangalore, Karnataka 560037 (IN); S, Ganesha, Bangalore, Karnataka 560037 (IN); SASTHRI, Aswin, Bangalore, Karnataka 560037 (IN); RAJENDRAN, Rohini, Bangalore, Karnataka 560037 (IN); SASI, Nivedya Parambath, Bangalore, Karnataka 560037 (IN); DAS, Debabrata, Bengaluru, Karnataka 560100 (IN)
(74) Representative: Nederlandsch Octrooibureau
(86) International application number: PCT/KR2023/012740
(87) International publication number: WO 2024/049146

(56) References cited:
- CN-B- 105 141 419
- KR-A- 20180 114 244
- KR-A- 20180 114 244
- US-A1- 2019 394 033
- SAMSUNG ET AL: "Updates to Solution#7 SI verification using Digital Signatures", vol. SA WG3, no. e-meeting; 20221010 - 20221014, 3 October 2022 (2022-10-03), XP052271760, Retrieved from the Internet <URL:https://ftp.3gpp.org/tsg_sa/WG3_Security/TSGS3_108e-AdHoc/Docs/S3-222851.zip S3-222851-FBS-Sol7Updates.doc> [retrieved on 20221003]
- RAJAVELSAMY R ET AL: "A Novel Method of Determining an Authentic Cell in Next Generation Cellular Communication System", 2024 IEEE WIRELESS COMMUNICATIONS AND NETWORKING CONFERENCE (WCNC), IEEE, 21 April 2024 (2024-04-21), pages 1 - 6, XP034631159, DOI: 10.1109/WCNC57260.2024.10571142
- ANONYMOUS: "3rd Generation Partnership Project; Technical Specification Group Services and System Aspects; Study on the security aspects of the next generation system (Release 14)", 3GPP STANDARD; TECHNICAL REPORT; 3GPP TR 33.899, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V1.3.0, 21 August 2017 (2017-08-21), Mobile Competence Centre ; 650, route des Lucioles ; F-06921 Sophia-Antipolis Cedex ; France , pages 1 - 605, XP051450230
- SAMSUNG: "Overhead Reduction using the other SI", 3GPP DRAFT; S3-170461_ONDEMANDSIV1, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG3, no. Sophia Antipolis (France); 20170206 - 20170210, 10 February 2017 (2017-02-10), Mobile Competence Centre ; 650, route des Lucioles ; F-06921 Sophia-Antipolis Cedex ; France , XP051217789
- SAMSUNG, APPLE, DEUTSCHE TELEKOM: "Updates to Solution#7 SI verification using Digital Signatures", 3GPP DRAFT; S3-222851, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG3, no. e-meeting; 20221010 - 20221014, 3 October 2022 (2022-10-03), Mobile Competence Centre ; 650, route des Lucioles ; F-06921 Sophia-Antipolis Cedex ; France, XP052271760

## Description

### Technical Field

Embodiments disclosed herein relate to wireless communication networks and more particularly to protecting signals in wireless communication networks, using identity-based cryptography.

### Background Art

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz (THz) bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/ protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultrahigh-performance communication and computing resources.

Prior art solutions are disclosed in documents KR 2018 0114244 A and CN 105 141 419 B.

### Disclosure of Invention

### Solution to Problem

This disclosure relates to wireless communication networks, and more particularly to a terminal and a communication method thereof in a wireless communication system.

The objects of the present invention are achieved by means of the appended set of claims. In accordance with an aspect of the disclosure, the embodiments herein is to disclose systems and methods to support identity-based cryptography for signalling message protection in wireless communication networks, by splitting/fragmenting the digital signature into two or more fragments and making at least one of the fragmented value applicable to more than a cell, so that frequency/rate of transmission can be reduced for that fragmented part.

Another object of the embodiments herein is to disclose systems and methods to broadcast the fragmented values at different intervals to reduce the over-the-air overhead and at the same time verifier able to acquire the required security parameter to verify the authenticity of the cell.

### Brief Description of Drawings

Embodiments herein are illustrated in the accompanying drawings, throughout which like reference letters indicate corresponding parts in the various figures. The embodiments herein will be better understood from the following description with reference to the following illustratory drawings. Embodiments herein are illustrated by way of examples in the accompanying drawings, and in which:
FIG. 1 depicts a method for ECCSI based Digital signature signing and verification, according to existing arts;
FIG. 2 depicts a communication network, according to embodiments as disclosed herein;
FIG. 3 depicts a process of provisioning the UE with the PVT by a network entity using a NAS message, according to embodiments as disclosed herein;
FIG. 4 depicts a process of provisioning the UE with PVT by the gNB using a RRC message, according to embodiments as disclosed herein;
FIG. 5 depicts a process of the gNB broadcasting partial digital signature (r ∥ s) for every period or in short periods and complete digital signature (r ∥ s ∥ PVT) when requested or with long intervals, according to embodiments as disclosed herein;
FIG. 6 depicts the process of the gNB broadcasting partial digital signature (r ∥ s) for every period or in short periods and PVT when requested or with long intervals in a separate SIB, along with other security parameters like KPAK, according to embodiments as disclosed herein;
FIG. 7 illustrates various hardware components of a network entity, according to the embodiments as disclosed herein;
FIG. 8 illustrates various hardware components of a base station, according to the embodiments as disclosed herein; and
FIG. 9 illustrates various hardware components of a UE according to the embodiments as disclosed herein.

### Best Mode for Carrying out the Invention

Aspects of the disclosure are to address at least the above-mentioned problems and/or disadvantages and to provide at least the advantages described below. Accordingly, an aspect of the disclosure is to provide a terminal and a communication method thereof in a wireless communication system.

Accordingly, the embodiments herein provide a method for protecting signalling messages in a wireless communication network using identity-based cryptography. The method comprises a gNB fragmenting a digital signature in a signalling message into a plurality of fragments. A first fragment comprises a Public Validation token (PVT) value of an Elliptic Curve-based Signature for Identity based Encryption (ECCSI), wherein the PVT value is applicable to a Radio Access Network (RAN)-based Notification Area (RNA). A second fragment comprises r and s signature values, wherein the second fragment is unique per cell.

Accordingly, the embodiments herein provide a gNodeB (gNB), wherein the gNB can fragment a digital signature in a signalling message into a plurality of fragments. A first fragment comprises a Public Validation token (PVT) value of an Elliptic Curve-based Signature for Identity based Encryption (ECCSI), wherein the PVT value is applicable to a Radio Access Network (RAN)-based Notification Area (RNA). A second fragment comprises r and s signature values, wherein the second fragment is unique per cell.

These and other aspects of the embodiments herein will be better appreciated and understood when considered in conjunction with the following description and the accompanying drawings. It should be understood, however, that the following descriptions, while indicating at least one embodiment and numerous specific details thereof, are given by way of illustration and not of limitation. Many changes and modifications may be made within the scope of the embodiments herein and the embodiments herein include all such modifications.

### Mode for the Invention

The embodiments herein and the various features and advantageous details thereof are explained more fully with reference to the non-limiting embodiments that are illustrated in the accompanying drawings and detailed in the following description. Descriptions of well-known components and processing techniques are omitted so as to not unnecessarily obscure the embodiments herein. The examples used herein are intended merely to facilitate an understanding of ways in which the embodiments herein can be practiced and to further enable those of skill in the art to practice the embodiments herein. Accordingly, the examples should not be construed as limiting the scope of the embodiments herein.

The embodiments herein and the various features and advantageous details thereof are explained more fully with reference to the non-limiting embodiments that are illustrated in the accompanying drawings and detailed in the following description. Descriptions of well-known components and processing techniques are omitted so as to not unnecessarily obscure the embodiments herein. The examples used herein are intended merely to facilitate an understanding of ways in which the embodiments herein may be practiced and to further enable those of skill in the art to practice the embodiments herein. Accordingly, the examples should not be construed as limiting the scope of the embodiments herein.

For the purposes of interpreting this specification, the definitions (as defined herein) will apply and whenever appropriate the terms used in singular will also include the plural and vice versa. It is to be understood that the terminology used herein is for the purposes of describing particular embodiments only and is not intended to be limiting. The terms "comprising", "having" and "including" are to be construed as open-ended terms unless otherwise noted.

The words/phrases "exemplary", "example", "illustration", "in an instance", "and the like", "and so on", "etc.", "etcetera", "e.g.," , "i.e.," are merely used herein to mean "serving as an example, instance, or illustration." Any embodiment or implementation of the present subject matter described herein using the words/phrases "exemplary", "example", "illustration", "in an instance", "and the like", "and so on", "etc.", "etcetera", "e.g.," , "i.e.," is not necessarily to be construed as preferred or advantageous over other embodiments.

Embodiments herein may be described and illustrated in terms of blocks which carry out a described function or functions. These blocks, which may be referred to herein as managers, units, modules, hardware components or the like, are physically implemented by analog and/or digital circuits such as logic gates, integrated circuits, microprocessors, microcontrollers, memory circuits, passive electronic components, active electronic components, optical components, hardwired circuits and the like, and may optionally be driven by a firmware. The circuits may, for example, be embodied in one or more semiconductor chips, or on substrate supports such as printed circuit boards and the like. The circuits constituting a block may be implemented by dedicated hardware, or by a processor (e.g., one or more programmed microprocessors and associated circuitry), or by a combination of dedicated hardware to perform some functions of the block and a processor to perform other functions of the block. Each block of the embodiments may be physically separated into two or more interacting and discrete blocks without departing from the scope of the disclosure. Likewise, the blocks of the embodiments may be physically combined into more complex blocks without departing from the scope of the disclosure.

It should be noted that elements in the drawings are illustrated for the purposes of this description and ease of understanding and may not have necessarily been drawn to scale. For example, the flowcharts/sequence diagrams illustrate the method in terms of the steps required for understanding of aspects of the embodiments as disclosed herein. Furthermore, in terms of the construction of the device, one or more components of the device may have been represented in the drawings by conventional symbols, and the drawings may show only those specific details that are pertinent to understanding the present embodiments so as not to obscure the drawings with details that will be readily apparent to those of ordinary skill in the art having the benefit of the description herein. Furthermore, in terms of the system, one or more components/modules which comprise the system may have been represented in the drawings by conventional symbols, and the drawings may show only those specific details that are pertinent to understanding the present embodiments so as not to obscure the drawings with details that will be readily apparent to those of ordinary skill in the art having the benefit of the description herein.

The accompanying drawings are used to help easily understand various technical features and it should be understood that the embodiments presented herein are not limited by the accompanying drawings. As such, the present disclosure should be construed to extend to any modifications, equivalents, and substitutes in addition to those which are particularly set out in the accompanying drawings and the corresponding description. Usage of words such as first, second, third etc., to describe components/elements/steps is for the purposes of this description and should not be construed as sequential ordering/placement/occurrence unless specified otherwise.

Those skilled in the art will understand that the principles of the disclosure can be implemented in any suitably arranged wireless communication system. For example, although the following detailed description of the embodiments of the disclosure will be directed to LTE and/or 5G communication systems, those skilled in the art will understand that the main points of the disclosure can also be applied to other communication systems with similar technical backgrounds and channel formats with slight modifications without departing from the scope of the disclosure. The technical schemes of the embodiments of the application can be applied to various communication systems, and for example, the communication systems may include global systems for mobile communications (GSM), code division multiple access (CDMA) systems, wideband code division multiple access (WCDMA) systems, general packet radio service (GPRS) systems, long term evolution (LTE) systems, LTE frequency division duplex (FDD) systems, LTE time division duplex (TDD) systems, universal mobile telecommunications system (UMTS), worldwide interoperability for microwave access (WiMAX) communication systems, 5th generation (5G) systems or new radio (NR) systems, etc. In addition, the technical schemes of the embodiments of the application can be applied to future-oriented communication technologies. In addition, the technical schemes of the embodiments of the application can be applied to future-oriented communication technologies.

In order to meet the increasing demand for wireless data communication services since the deployment of 4G communication systems, efforts have been made to develop improved 5G or pre-5G communication systems. Therefore, 5G or pre-5G communication systems are also called "Beyond 4G networks" or "Post-LTE systems".

A cell periodically broadcasts synchronization signals and system information (SI). A User Equipment (UE) detects a cell based on the synchronization signals. If the signal quality of detected cell is above a defined threshold, then the UE determines whether the cell is authentic or not, to camp on it. A cell is considered to be authentic, if the authenticity verification of the system information received from the cell is successful. In order to enable the UE to validate the authenticity of received system information, the NR digitally signs the broadcasted system information. 3GPP may require an ID based signature scheme which is lightweight than certificate based solution, for digitally signing the broadcasted system information, since it does not require the huge size certificate to be sent in the broadcast message (c.f., Solution #7 and Solution #10 of TR 33.809).

In an Elliptic Curve-Based Certificateless Signatures for Identity-Based Encryption (ECCSI) [RFC 6507] method, a Key Management Service (KMS) generates the global public key called Public Authentication Key (KPAK) and secret key Secret Authentication Key (KSAK), and provides the root of trust for all users. For each user, the key issued by KMS includes a Secret Signing Key (SSK) and a Public Validation Token (PVT). The Signer has an Identifier, to which the SSK will have been cryptographically bound by means of a PVT by the KMS.

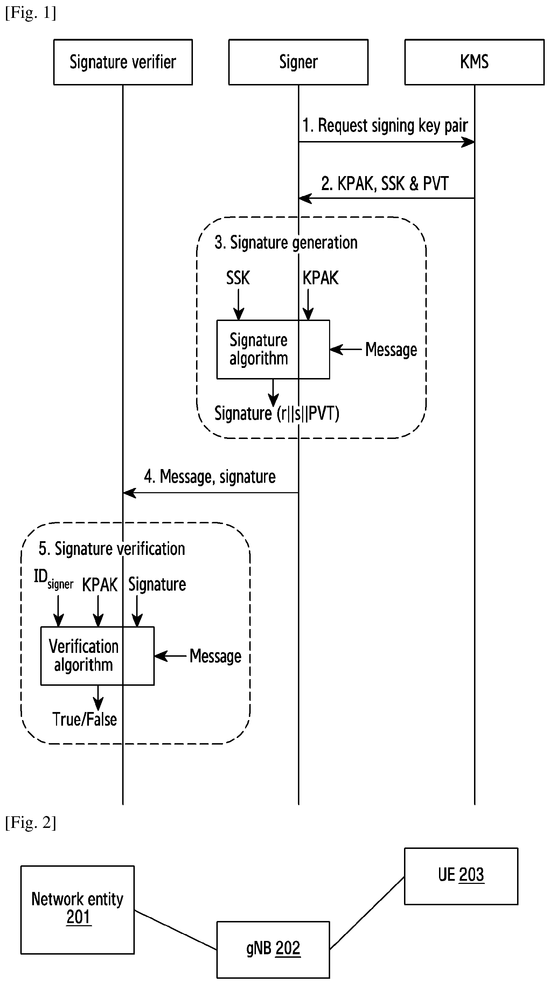

FIG. 1 depicts a method for ECCSI based Digital signature signing and verification, according to existing arts.

The signer and signature verifier do not involve the KMS, as shown in FIG. 1 (which depicts a method for ECCSI based Digital signature signing and verification), which means,
- to generate the signature, only SSK, KPAK and message are needed. In ECCSI, signature is concatenation of the value r, value s and value PVT. ECCSI method generates values r, s and PVT; and
- to verify the signature, only the signature (value r and value s), message, Signer ID and the KPAK are needed. Further the Generator point (G) should be known to the verifier.

In step 1, the message signer, when the signing key pair (SSK and PVT) are not available, will request the KMS to provide KPAK and signing pair, by including the signing/signer's ID along with the request to the KMS. In step 2, the KMS upon receiving the signing ID from the signer, generates signing key pair (SSK and PVT) from the signer's ID and send the KPAK, SSK and PVT to the signer. In step 3, on receiving the KPAK and signing key pair from the KMS, the signer signs the message. In step 4, the message signer transmits the generated signature (r ∥ s ∥ PVT) along with the message. In step 5, the verifier, on receiving the message and the signature from the signer, verifies the signature of the message, using the signature, message, ID, and the KPAK. The KPAK is provisioned or acquired by the verifier from the KMS using out-of-band provisioning mechanism.

Details of generation of r, s, SSK, KPAK and PVT are detailed in IETF RFC 6507.

The ECCSI distinguishes itself from a conventional public key cryptography with two features:
(1) ECCSI avoids the use of certificates, while certificates management in PKI is extremely complex in practice; and
(2) ECCSI is expected to have better performance in some cases (when there are a greater number of signers).

The Signer has an Identifier, to which his Secret Signing Key (SSK) will have been cryptographically bound by means of a Public Validation Token (PVT) by the KMS.

In certificate-based public key cryptosystem, the authenticity of a public key is guaranteed by a digital certificate, which binds a public key via a signature generated by the certification authority (CA). In order to get an authentic and valid public key, it is required to verify certificates in a trust chain, which leads to huge communication and computational overheads. An infrastructure is required to issue certificates, and certificate management is complicated, certificate-based public key cryptography is not suitable for resources-constrained devices. In identity-based public key cryptography, public keys are derived from user's IDs (such as e-mail ID, like so) [c.f., IETF RFC 6507] and surely be authenticated. It can guarantee the authenticity of public key and simplify the public key management without certificates. Private keys are derived from users' public keys (or their identities) via a Key Management Server (KMS). The KMS generates partial private key for a signer according to its ID. Since Signer identity is used with generic public key, a certificate is unnecessary.

However, the existing certificate-less public key cryptography schemes are also not effective and/or efficient for resources-constrained systems because of their huge communication overheads, like sending the PVT in every signed message, as it is redundant transmission if PVT is same in a location or for a particular group for a long time and/or if verifiers are already in possession of the PVT. Therefore, it is important to address the overhead introduced by the ECCSI on the resources-constrained/sensitive systems like 5G.

Also, there is a physical layer limitation to the maximum size a SIB can take. The maximum SIB1 or SI message, which can carry multiple SIBs, size is 2976 bits.

Hence, there is a need in the art for solutions which will overcome the above mentioned drawback(s), among others.

The embodiments herein achieve systems and methods to support identity-based cryptography for signalling message protection in wireless communication networks, by splitting/fragmenting the digital signature into two or more fragments and making at least one of the fragmented value applicable to more than a cell, so that frequency/rate of transmission can be reduced for that fragmented part. Referring now to the drawings, and more particularly to FIGS. 2 through 6, where similar reference characters denote corresponding features consistently throughout the figures, there are shown at least one embodiment.

The following definitions and abbreviations have been referred to herein:
SI: System Information
3GPP: 3rd Generation Partnership Project
ECCSI: Elliptic Curve-based Signature for Identity based Encryption
KMS: Key Management Service
KPAK: KMS Public Authentication Key
KSAK: KMS Secret Authentication Key
SSK: Secret Signing Key
PVT: Public Validation Token
PKI: Public Key Infrastructure
MIB: Master Information Block
SIB: System Information Block
NAS: Non-Access Stratum
AS: Access Stratum
RRC: Radio Resource Control
RACH: Random Access Channel
CAG: Closed Access Group
CSG: Cell Subscriber Group
NSSAI: Network Slice Selection Assistance Information
NCGI: NR Cell Global Identifier
NCI: NR Cell Identifier
TAC: Tracking Area Code

Embodiments herein disclose systems and methods to support identity-based cryptography for signalling message protection in wireless communication networks, by splitting/fragmenting the digital signature into two or more fragments and making at least one of the fragmented value applicable to more than a cell, so that frequency/rate of transmission can be reduced for that fragmented part. Embodiments herein disclose systems and methods to broadcast the fragmented values at different intervals to reduce the over-the-air overhead and at the same time verifier able to acquire the required security parameter to verify the authenticity of the cell.

This is achieved, for illustrative purpose, by making the PVT value of the ECCSI applicable to RAN area (RNA) and signer's ID specific to the cell. By doing so, the SSK will be unique per cell (isolation of the key per cell is achieved) and at the same time PVT is applicable for set of cells. Here a RAN area can be a subset of a Core Network (CN) Tracking Area or equal to a CN Tracking Area. List of cells (one or more) that constitute the RNA. A RAN area is specified by one RAN area ID, which comprises of a TAC and optionally a RAN area Code. A cell broadcasts one or more RAN area IDs in the SI (system information). By making the PVT scope to RAN Area, the frequency of broadcasting the PVT in the SI can be reduced and/or provisioned by other means; for example, unicast messages (NAS or RRC messages), which leads to a reduction in the overhead in Over The Air (OTA) transmission of the PVT along with other digital signature parameter values (r & s values) and can allow using of that space in the SI for larger size of r and/or s values to increase the security level (for example, instead of 128 bits keys, larger size keys can be used).

FIG. 2 depicts a communication network. The network 200 comprises one or more network entities 201, one or more Next Generation Node Bs (gNBs) 202, and one or more UEs 203. The one or more network entities 401 can be at least one of an Access and Mobility Function (AMF), a Session Management Function (SMF), or any other suitable entity. FIG. 2 depicts an example network, where there is a network comprising a network entity 201 connected to a gNB 202, wherein the gNB 202 is connected to a UE 203.

Embodiments herein disclose systems and methods to support identity-based cryptography for signalling message protection in wireless communication networks, by splitting/fragmenting the digital signature into two or more fragments and making at least one of the fragmented value applicable to more than a cell, so that frequency/rate of transmission can be reduced for that fragmented part. Embodiments herein disclose systems and methods to broadcast the fragmented values at different intervals to reduce the over-the-air overhead and at the same time verifiable to acquire the required security parameter to verify the authenticity of the cell.

This is achieved, for illustrative purpose, by making the PVT value of the ECCSI applicable to RAN area (RNA) and signer's ID specific to the cell. By doing so, the SSK will be unique per cell (isolation of the key per cell is achieved) and at the same time PVT is applicable for set of cells. Here a RAN area can be a subset of a Core Network (CN) Tracking Area or equal to a CN Tracking Area. List of cells (one or more) that constitute the RNA. A RAN area is specified by one RAN area ID, which comprises of a TAC and optionally a RAN area Code. A cell broadcasts one or more RAN area IDs in the SI (system information). By making the PVT scope to RAN Area, the frequency of broadcasting the PVT in the SI can be reduced and/or provisioned by other means; for example, unicast messages (NAS or RRC messages), which leads to a reduction in the overhead in Over The Air (OTA) transmission of the PVT along with other digital signature parameter values (r & s values) and can allow using of that space in the SI for larger size of r and/or s values to increase the security level (for example, instead of 128 bits keys, larger size keys can be used).

In an embodiment herein, the PVT can be for an entire PLMN or a NSSAI or SNPN ID or for a tracking area and/or for more than one tracking area (registered area) or for a RAN-based notification area (RNA) or more than one RNA or RAN Area ID or more than one RAN Area IDs or RAN Area ID or more than one RAN Area IDs or a CAG ID or more than one CAG ID or a CSG or a group of CSG or a NR Cell Global Identity (NCGI) or more than one NCGIs or NR cell Identity (NCI) or more than one NCIs or a gNB identity or more than one gNB identities or cell identity or more than one cell identities.

In an embodiment herein, the digital signature is calculated for each SI window, i.e., digital signature is calculated for all SIBs broadcasted in the SI window. In an embodiment herein, the digital signature can be calculated on all broadcasted SIBs within the period.

The gNB 202 can fragment the digital signature in a signalling message into a plurality of fragments. Among the plurality of fragments, a first fragment comprises a Public Validation token (PVT) value of an Elliptic Curve-based Signature for Identity based Encryption (ECCSI). Among the plurality of fragments, a second fragment comprises r and s signature values, wherein the second fragment is unique per cell.

In an embodiment herein, the PVT value is applicable only to a Radio Access Network (RAN)-based Notification Area (RNA). In an embodiment herein, the first fragment is broadcasted in a Non-Access Stratum (NAS) message. In an embodiment herein, the gNB 202 can broadcast the first fragment on receiving a request from the UE 203. In an embodiment herein, the gNB 202 can broadcast the first fragment at long intervals in a second SIB broadcast message.

This comprises the UE 203 acquiring Master Information Block (MIB) and System Information Block (SIB). In an embodiment herein, the SIB comprises the r and s values. The UE 203 can hold the verification of the received MIB and SIB, if the PVT is not already available at the UE 203. The UE 203 can send a RRC Setup Complete message with a Registration Request in a dedicated NAS message to the gNB 202. In an embodiment herein, the Registration Request message comprises a PVT request. The gNB 202 can send the PVT request in an initial UE message to a network entity 201 (such as the AMF). The network entity 201 can send a NAS message to the UE 203, via the gNB 202. The NAS message, as sent by the network entity 201, comprises the PVT. The NAS message can be at least one of a Registration accept message, a Registration reject message, a NAS Security Mode Command message, and a DL NAS transport message. On receiving the NAS message, the UE 203 can verify the received MIB and SIB by constructing the digital signature from the received r and s values and the PVT, wherein the PVT can already be stored in the UE 203; or received in the NAS message from the network entity.

In an embodiment herein, the gNB 202 can broadcast the second fragment in a Radio Resource Control (RRC) message. This further comprises the UE 203 acquiring MIB and SIB. In an embodiment herein, the SIB comprises the r and s values. In an embodiment herein, the gNB 202 can broadcast the second fragment of the digital signature for every period or at short intervals in a SIB broadcast message. In an embodiment herein, the gNB 202 can broadcast the digital signature on receiving a request from the UE 203, or at long intervals in a SIB broadcast message. In an embodiment herein, the gNB 202 can broadcast the second fragment of the digital signature for every period. In an embodiment herein, the gNB 202 can broadcast the second fragment of the digital signature at short intervals in a first SIB broadcast message.

The gNB 202 can fragment the digital signature in a signalling message into a plurality of fragments. Among the plurality of fragments, a first fragment comprises a Public Validation token (PVT) value of an Elliptic Curve-based Signature for Identity based Encryption (ECCSI). Among the plurality of fragments, a second fragment comprises r and s signature values, wherein the second fragment is unique per cell.

In an embodiment herein, the PVT value is applicable only to a Radio Access Network (RAN)-based Notification Area (RNA). In an embodiment herein, the first fragment is broadcasted in a Non-Access Stratum (NAS) message. In an embodiment herein, the gNB 202 can broadcast the first fragment on receiving a request from the UE 203. In an embodiment herein, the gNB 202 can broadcast the first fragment at long intervals in a second SIB broadcast message.

This comprises the UE 203 acquiring Master Information Block (MIB) and System Information Block (SIB). In an embodiment herein, the SIB comprises the r and s values. The UE 203 can hold the verification of the received MIB and SIB, if the PVT is not already available at the UE 203. The UE 203 can send a RRC Setup Complete message with a Registration Request in a dedicated NAS message to the gNB 202. In an embodiment herein, the Registration Request message comprises a PVT request. The gNB 202 can send the PVT request in an initial UE message to a network entity 201 (such as the AMF). The network entity 201 can send a NAS message to the UE 203, via the gNB 202. The NAS message, as sent by the network entity 201, comprises the PVT. The NAS message can be at least one of a Registration accept message, a Registration reject message, a NAS Security Mode Command message, and a DL NAS transport message. On receiving the NAS message, the UE 203 can verify the received MIB and SIB by constructing the digital signature from the received r and s values and the PVT, wherein the PVT can already be stored in the UE 203; or received in the NAS message from the network entity.

In an embodiment herein, the gNB 202 can broadcast the second fragment in a Radio Resource Control (RRC) message. This further comprises the UE 203 acquiring MIB and SIB. In an embodiment herein, the SIB comprises the r and s values. In an embodiment herein, the gNB 202 can broadcast the second fragment of the digital signature for every period or at short intervals in a SIB broadcast message. In an embodiment herein, the gNB 202 can broadcast the digital signature on receiving a request from the UE 203, or at long intervals in a SIB broadcast message. In an embodiment herein, the gNB 202 can broadcast the second fragment of the digital signature for every period. In an embodiment herein, the gNB 202 can broadcast the second fragment of the digital signature at short intervals in a first SIB broadcast message.

### PVT provisioning via NAS message:

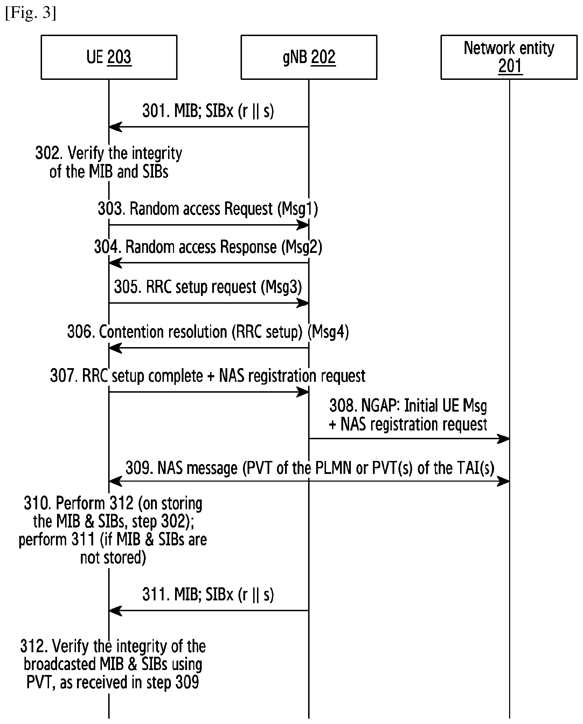

FIG. 3 depicts a process of provisioning the UE with the PVT by a network entity using a NAS message. On cell selection (e.g., upon power on, cell-reselection, return from out of coverage, after reconfiguration with sync completion, after entering the network from another RAT, upon receiving an indication that the SI has changed, upon receiving a PWS (Public Warning System) notification and whenever the UE does not have a valid version of a stored SIB), instep 301, the UE 203 acquires the MIB and SIB. In an embodiment herein, the UE 203 receives the r and s value of the signature (c.f., RFC 6507) in the broadcasted SIB message; i.e., signature as (rlls) only.

If the UE 203 is already in possession of the PVT, instep 302, the UE 203 verifies the received MIB/SIB using at least one of the KPAK, ID_{signer} and the received signature (received (r ∥ s) in the SIB broadcast message) and the stored PVT. The UE 203 constructs the signature as (r ∥ s ∥ PVT) from the stored PVT and the received r and s values to verify the authenticity of the message/cell. If the UE 203 is not holding the PVT, then it follows step 303. The UE 203 retrieves the PVT, if available, using the parameters broadcasted in the SI, such as, but not limited to, cell ID and/or TAI and/or RAN Area Code and/or RAN Area ID, like so. The UE 203 stores the PVT along with the cell ID and/or TAI and/or RAN Area Code and/or RAN Area ID, like so, to identify and retrieve the PVT.

In step 303, the UE 203 initiates RACH (Random Access Channel) procedure as specified in TS 38.331. Instep 304, the gNB 202 detects the RACH Msg#1 and sends Msg#2 to the UE 203, as specified in TS 38.331. In steps 305 and 306, the UE 203 sends RRC Setup message to setup SRB1, contention resolution and the master cell configuration, as specified in TS 38.331. In step 307, the UE 203 sends the RRC Setup Complete message with a "Registration Request" in the dedicated NAS Message to the gNB 202. The Registration Request message comprises the PVT request indication along with the other possible parameters. The Registration request also comprises UE network capability information. The gNB 202 selects the network entity 201 (such as an Access and Mobility Function (AMF)) for this session and allocates RAN UE NGAP ID to the UE 203. The network entity 201 uses NGAP ID to address the UE context on the gNB 202.

In step 308, the gNB 202 sends the Initial UE Message to the selected network entity 201. The message carries the "Registration Request" message received from the UE 203 in the RRC Setup Complete message. The RRC Setup Complete message also carries the information about PVT request indication along with the other possible parameters. The RRC Setup Complete message also carries the "RAN UE NGAP ID" and the "RRC Establishment Cause" in the message. Further, the network entity 201 follows the NAS establishment procedure as defined in 3GPP Technical Specification 23.502 and 33.501.

In step 309, the network entity 201 sends the PVT of the PLMN and/or one or more PVT(s) of the TAI(s) to the UE 203 in a NAS message. The network entity 201 may also send the KPAK, G to the UE 203 in the NAS message. In an embodiment herein, the network entity 201 obtains and/or downloads and/or is provisioned by the KMS with the PVT(s) associated with the identifier, for example, PLMN and/or one or more PVT(s) of the TAI(s). The network entity 201 provides the UE 203 with the received PVT(s) and associated identifier in NAS messages. The NAS message can be at least one of the Registration accept message, Registration reject message, NAS Security Mode Command message, DL NAS transport message, and so on. In an embodiment herein, a new dedicated NAS message can be used to deliver the required security parameters such as KPAK, PVT, G to the UE 203 other than the partial signature (r ∥ s) for signature verification. In an embodiment herein, one or more security parameters (such as, but not limited to, KPAK, PVT, G) is included in the SoR (Steering of Roaming) information list. For the list PLMN included, the security parameters are also included. In an embodiment herein, one or more than one security parameters KPAK, PVT, G information can be included in the UPU procedure along with the index. The index being for illustrative purposes as follows: TAI and/or list of TAIs and/or PLMN ID and/or Registered area. In an embodiment herein, the KPAK and PVT are configured in the UE 203 using the UE Configuration Update procedure. In an embodiment herein, the PVT(s) are bound/associated to the entire PLMN or a NSSAI or SNPN ID or for a Tracking Area and/or for more than one Tracking area (Registered Area) or for a RAN-based Notification Area (RNA) or more than one RNA or a CAG ID or more than one CAG ID or a CSG or a group of CSG or a NR Cell Global Identity (NCGI) or more than one NCGIs or NR cell Identity (NCI) or more than one NCIs or a gNB Identity or more than one gNB Identities or Cell Identity or more than one cell Identities. The UEs 203 in the same PLMN or NSSAI, SNPN, TA/RA and/or CAG cell uses the same PVT. In an embodiment herein, the UE 203 stores the PVT along with the identity/identities/parameters, for illustrative purpose, cell ID and/or TAI and/or RAN Area Code and/or RAN Area ID, like so, to identify and retrieve the PVT when required. In an embodiment herein, the PVT is indexed with the appropriate identifier for example, cell related identifier. For illustrative purpose, the PVT is indexed with at least one of but not limited to PLMN ID or S-NSSAI or SNPN ID, PCI, CAG DI, NR cell identity, NCGI or any gNB related Identifier. The indexing is required to identify and retrieve the PVT when required. In an embodiment herein, the ID_{signer} is the PLMN ID or a NSSAI or SNPN ID or TAI or RAN Area Code or RAN Area ID or a CAG ID or CSG or NR Cell Global Identity (NCGI) or NR cell Identity (NCI) or gNB Identity or Cell Identity.

On receiving the security parameters (for illustrative purpose: KPAK, PVT, G) from the network entity 201 and if the previously acquired MIBs/SIBs are stored at the UE (along with received partial signature (rlls), in step 310, the UE 203 verifies the stored MIBs/SIBs. If the UE 203 does not have the stored MIBs/SIBs, the UE 203 follows with steps 311 and 312. To verify the MIBs/SIBs, the UE 203 can use the signature of message (constructed using the partial signature (rlls) and PVT_{signerID}), message, ID_{signer}, and the KPAK. The KPAK is provisioned or acquired from the KMS using out-of-band provisioning mechanism and/or received from the network entity 201 along with the PVT (as described herein). In an embodiment herein, the UE (verifier) 203 uses the same ID indexed to the received PVT; for example, if the PVT is indexed to the NCI (NR Cell Identity) (i.e., PVT_{NCI}), the UE 203 uses NCI as one of the inputs as the ID of the signer to verify the received MIBs/SIBs. In an embodiment herein, the index value corresponds to numerical value associated with the signer IDs. For example, 00-PLMN ID, 01-Cell ID, 02- NSSSAI like so.

In steps 311 and 312, the UE 203 requests for the MIBs/SIBs on demand. On receiving the MIBs/SIBs (rlls), the UE 203 follows the verification procedure as described in step 310. In an embodiment herein, the r and s values can be sent in the same SIB message. In an embodiment herein, the r and s values can be sent in different SIB messages.

### PVT provisioning via RRC message:

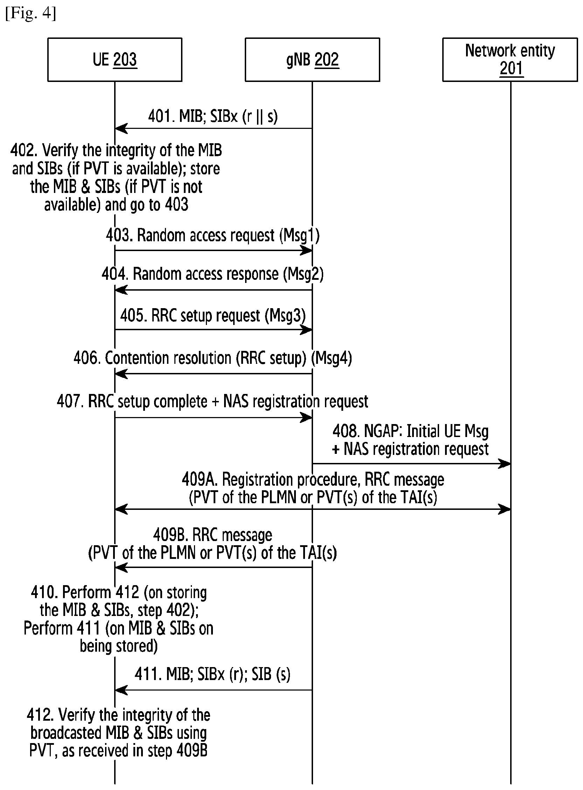

FIG. 4 depicts a process of provisioning the UE with PVT by the gNB using a RRC message. On cell selection (e.g., upon power on, cell-reselection, return from out of coverage, after reconfiguration with sync completion, after entering the network from another RAT, upon receiving an indication that the SI has changed, upon receiving a PWS (Public Warning System) notification and whenever the UE does not have a valid version of a stored SIB), in step 401, the UE 203 acquires the MIB and SIB. In an embodiment herein, the UE 203 receives only the r and s values of the signature (c.f., RFC 6507) in the broadcasted SIB message i.e., signature as (rlls) only.

If the UE 203 is already in possession of the PVT, in step 402, the UE 203 verifies the received MIB/SIB using at least one of the KPAK, ID_{signer} and the received signature (received (r ∥ s) in the SIB broadcast message) and the stored PVT. The UE 203 constructs the signature as (r ∥ s ∥ PVT) from the stored PVT and the received r and s values to verify the authenticity of the message/cell. If the UE 203 is not holding the PVT, then the UE 203 follows step 403. The UE 203 retrieves the PVT, if available, using the parameters broadcasted in the SI, such as, but not limited to, cell ID and/or TAI and/or RAN Area Code and/or RAN Area ID, like so; i.e., the UE 203 stores the PVT along with the cell ID and/or TAI and/or RAN Area Code and/or RAN Area ID, like so, to identify and retrieve the PVT.

In step 403, the UE 203 initiates RACH (Random Access Channel) procedure as specified in TS 38.331. In step 404, the gNB 202 detects the RACH Msg#1 and sends Msg#2 as specified in TS 38.331, to the UE 203. In steps 405 and 406, the UE 203 sends a RRC Setup message to setup SRB1, contention resolution and the master cell configuration as specified in TS 38.331 to the gNB 202. In step 407, the UE 203 sends the RRC Setup Complete message with a "Registration Request" in the dedicated NAS Message to the gNB 202. In step 408, the gNB 202 sends the Initial UE Message to the selected network entity 201. The Initial UE Message carries the "Registration Request" message received from the UE 203 in the RRC Setup Complete message. Further, the network entity 201 follows the NAS establishment procedure as defined in 3GPP Technical Specification 23.502 and 33.501.

In step 409A and 409B, the network entity 201 performs an Authentication procedure to verify that the UE 203 is legitimate and legally authorized to get service from the network. The UE 203 sends Registration Complete and PDU session establishment request to the network entity 201. The UE 203 establishes a RRC connection with the gNB 202. The gNB 202 sends the PVT(s) and may also send the KPAK, G to the UE 203 in an Access Stratum (AS) message. In an embodiment herein, the gNB 202 obtains and/or downloads and/or is provisioned by the KMS with the PVT(s) associated with the identifier; for example, the PLMN and/or one or more PVT(s) of the TAI(s). The gNB 202 provides the UE 203 with the received PVT(s) and associated identifiers in the AS messages. The AS message can. be at least one of the RRC reconfiguration, RRC Release, AS Security Mode Command message, and so on. In an embodiment herein, a new dedicated AS message can be used to deliver the required security parameters (such as KPAK, PVT, G) other than the partial signature (r ∥ s) for signature verification. In an embodiment herein, the PVT(s) are bound/associated to an entire PLMN or a NSSAI or SNPN ID or for a Tracking Area and/or for more than one Tracking area (Registered Area) or for a RAN-based Notification Area (RNA) or more than one RNA or a CAG ID or more than one CAG ID or a CSG or a group of CSG or a NR Cell Global Identity (NCGI) or more than one NCGIs or NR cell Identity (NCI) or more than one NCIs or a gNB Identity or more than one gNB Identities or cell Identity or more than one cell Identities. The UEs in the same PLMN or NSSAI, SNPN, TAIRA and/or CAG cell can use the same PVT. In an embodiment herein, the PVT is indexed with an appropriate identifier; for example, a cell related identifier. In an example, the PVT is indexed with at least one of but not limited to PLMN ID or S-NSSAI or SNPN ID, PCI, CAG DI, NR cell identity, NCGI or any gNB related Identifier. The indexing can be used to identify and retrieve the PVT when required. In an embodiment herein, the index value corresponds to numerical value associated with the signer IDs. For example, 00-PLMN ID, 01-Cell ID, 02- NSSSAI like so.

In step 410, on receiving the security parameters (such as, but not limited to, KPAK, PVT, G) from the gNB, if the recently acquired MIBs/SIBs are stored at the UE 203, then the UE 203 verifies the stored MIBs/SIBs. If the UE 203 does not have the stored MIBs/SIBs it follows with the steps 411 and 412. To verify the MIBs/SIBs, the UE 203 can use the signature of message (constructed using the partial signature (r ∥ s) and PVT_{signerID}), message, ID_{signer}, and the KPAK. The KPAK can be provisioned or acquired from the KMS using out-of-band provisioning mechanism and/or received from the network entity 201, along with the PVT as described herein. In an embodiment herein, the UE (verifier) 203 can use the same ID indexed to the received PVT; for example, if the PVT is indexed to the NCI (NR Cell Identity) i.e., PVT_{NCI,} the UE 203 uses the NCI as one of the inputs as the ID of the signer to verify the received MIBs/SIBs.

In steps 411 and 412, the UE 203 acquires the MIBs/SIBs. On receiving the MIBs/ SIBs (r ∥ s), the UE 203 follows the verification procedure as described in step 410. In an embodiment herein, the r and s values can be sent in the same SIB message. In an embodiment herein, the r and s values can be sent in different SIB messages.

### PVT provisioning via SIB broadcast message:

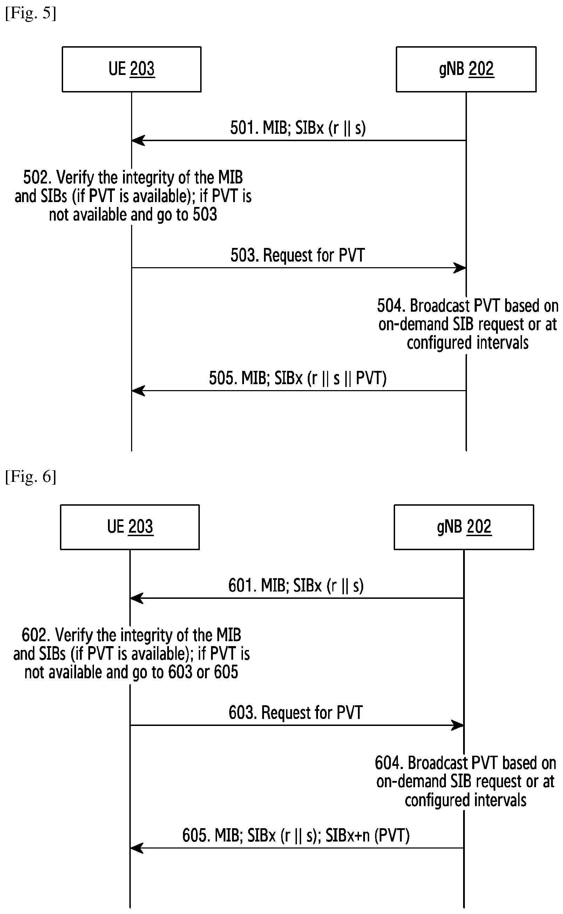

FIG. 5 depicts a process of the gNB broadcasting partial digital signature (r ∥ s) for every period or in short periods and complete digital signature (r ∥ s ∥ PVT) when requested or with long intervals, according to embodiments as disclosed herein.

Embodiments herein disclose performing PVT distribution over SIB together/along with r and/or s parameters, on being requested by one or more than one UE. FIG. 5 depicts a process of the gNB broadcasting partial digital signature (r ∥ s) for every period or in short periods and complete digital signature (r ∥ s ∥ PVT) when requested or with long intervals.

On cell selection (for example, upon power on, cell-reselection, return from out of coverage, after reconfiguration with sync completion, after entering the network from another RAT, upon receiving an indication that the SI has changed, upon receiving a PWS (Public Warning System) notification and whenever the UE 203 does not have a valid version of a stored SIB), in step 501, the UE 203 acquires the MIB and SIB. In an embodiment herein, the UE 203 receives only the r and s values of the signature (c.f., RFC 6507) in the broadcasted SIB message; i.e., signature as (r ∥ s) only.

In step 502, if the UE 203 is already in possession of the PVT, then the UE 203 verifies the received MIB/SIB, if PVT for the cell/TAI/GNB/PLMN is already available in the UE. If an appropriate PVT is not available, the UE 203 performs step 503. If an appropriate PVT is available, the UE 203 follows step 505 (i.e., the UE 203 waits for the step 505, to acquire the relevant SIBs).

In step 503, the UE 203 requests for the PVT from the gNB 202 (by sending SI request message and including an indication that security parameters are required for digital signature verification.

In step 504, the gNB 202 broadcasts the PVT based on on-demand SIB request or based on pre-configured intervals.

In step 505, the UE 203 receives the SIB(s) with security parameters from the gNB 202. On receiving the MIBs/SIBx (rlls ∥ PVT), the UE 203 follows the verification procedure as described instep 302 in FIG. 3. Here, SIBx is the SIB message with a numeric value; for example, SIBx can be SIB25 which is received after MIB based on pre-configured interval time at x.

FIG. 6 depicts the process of the gNB broadcasting partial digital signature (r ∥ s) for every period or in short periods and PVT when requested or with long intervals in a separate SIB, along with other security parameters like KPAK, according to embodiments as disclosed herein.

Embodiments herein disclose performing PVT distribution over SIB (not along with r and s parameters), which is performed on being requested by one or more than one UE. FIG. 6 depicts the process of the gNB broadcasting partial digital signature (r ∥s) for every period or in short periods and PVT when requested or with long intervals in a separate SIB, along with other security parameters like KPAK, G.

On cell selection (e.g., upon power on, cell-reselection, return from out of coverage, after reconfiguration with sync completion, after entering the network from another RAT, upon receiving an indication that the SI has changed, upon receiving a PWS (Public Warning System) notification and whenever the UE does not have a valid version of a stored SIBn), in step 601, the UE 203 acquires the MIB and SIB. In an embodiment herein, the UE 203 receives only the r and s values of the signature (c.f., RFC 6507) in the broadcasted SIB message i.e., signature as (r ∥ s) only.

If the UE 203 is already in possession of the PVT, in step 602, the UE 203 verifies the received MIB/SIB, if PVT for the cell/TAI/GNB/PLMN is already available in the UE 203. If an appropriate PVT is not available, then the UE 203 performs step 603; else the UE 203 follows step 605 (i.e., the UE 203 waits for the step 605, to acquire the relevant SIBs).

In step 603, the UE 203 requests for the PVT from the gNB 202 by sending a SI request message, wherein the request includes an indication that security parameters are required for digital signature verification.

In step 604, the gNB 202 broadcasts the PVT. In an embodiment herein, the gNB 202 broadcasts the PVT based on the on-demand SIB request. In an embodiment herein, the gNB 202 broadcasts the PVT at pre-configured intervals.

In step 605, the UE 203 receives the MIB and the broadcasted SIB(s) (i.e., SIBx (r ∥ s)/SIBx+n (r ∥ s ∥ PVT)), wherein the SIBs have been broadcasted by the gNB 202 based on the on-demand SIB request and/or at pre-configured intervals. On receiving the broadcasted SIBs, it follows the verification procedure as described instep 302 in FIG. 3. SIBx is the SIB message which is received after the MIB at pre-configured intervals at x intervals. SIBx+n is the SIB message which is received after previous SIBs based on the pre-configured x+n intervals. For example, SIBx can be SIB25 and SIBx+n means SIB27 (where x can be 25 and n can be 2).

In an embodiment herein, the security parameters are segregated/separated and carried by different SIBs at different periodicities. For example, SIBx carries the partial digital signature r and s only. SIBy carries the security parameters like PVT and/or G and/or KPAK. Scheduling periodicities can be 80/160/320/640 ms for SIBx. For SIBy, scheduling periodicities can be 640/1280/2560/5120 ms. In an embodiment herein, the scheduling periodicities of both SIBx and SIBy are the same (for example, every 640 ms). In an embodiment herein, the scheduling periodicities of both SIBx and SIBy are different.

In an embodiment, when the other PKI schemes are utilized (such as, but not limited to, ECDSA) to overcome the short comes/overheads mentioned, the security parameters are segregated/separated and carried by different SIBs at different periodicities. For example, SIBx carries the digital signature, and SIBy carries the other long term and/or widely applicable security parameters (such as, but not limited to, certificate(s)) required to verify the digital certificate. Scheduling periodicities for illustrative purposes which can be 160ms for SIBx and for SIBy scheduling periodicities can be 5120ms. In an embodiment, the scheduling periodicities of both SIBx and SIBy are the same (for example, every 640ms). In an embodiment, the scheduling periodicities of the SIBx and SIBy are different.

In an embodiment herein, the SIB1 and/or System Information (SI) includes the information related to the availability and scheduling of SIB(s) that carries the security parameters (such as, but not limited to, partial signature - r, s and PVT parameters); e.g., mapping of SIBs that includes the authentication signature parameters, periodicity etc.

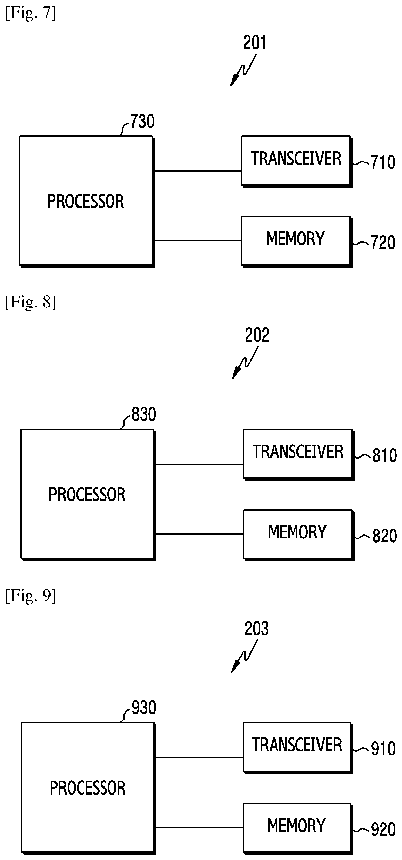

FIG. 7 illustrates various hardware components of a network entity, according to the embodiments as disclosed herein.

Referring to FIG. 7, the network entity includes a transceiver (710), a memory (720), and a processor (730). The transceiver (710), the memory (720), and the processor (730) of the network entity may operate according to a communication method of the network entity described above. However, the components of the terminal are not limited thereto. For example, the network entity may include fewer or a greater number of components than those described above. However, the components of the network entity are not limited thereto. For example, the network entity may include more or fewer components than those described above. In addition, the processor (730), the transceiver (710), and the memory (720) may be implemented as a single chip. Also, the processor (730) may include at least one processor. Furthermore, the network entity of FIG. 7 corresponds to the network entity 201 of the FIG. 2.

The network entity includes at least one entity of a core network. For example, the network entity includes an AMF, a session management function (SMF), a policy control function (PCF), a network repository function (NRF), a user plane function (UPF), a network slicing selection function (NSSF), an authentication server function (AUSF), a UDM and a network exposure function (NEF), but the network entity is not limited thereto.

The transceiver (710) collectively refers to a network entity receiver and a network entity transmitter, and may transmit/receive a signal to/from a base station or a UE. The signal transmitted or received to or from the base station or the UE may include control information and data. In this regard, the transceiver (710) may include an RF transmitter for up-converting and amplifying a frequency of a transmitted signal, and an RF receiver for amplifying low-noise and down-converting a frequency of a received signal. However, this is only an example of the transceiver (710) and components of the transceiver (710) are not limited to the RF transmitter and the RF receiver.

The transceiver (710) may receive and output, to the processor (730), a signal through a wireless channel, and transmit a signal output from the processor (730) through the wireless channel.

The memory (720) may store a program and data required for operations of the network entity. Also, the memory (720) may store control information or data included in a signal obtained by the network entity. The memory (720) may be a storage medium, such as a ROM, a RAM, a hard disk, a CD-ROM, and a DVD, or a combination of storage media.

The processor (730) may control a series of processes such that the network entity operates as described above. For example, the transceiver (710) may receive a data signal including a control signal, and the processor (730) may determine a result of receiving the data signal.

FIG. 8 illustrates a structure of a base station according to an embodiment of the disclosure.

As shown in FIG. 8, the base station according to an embodiment may include a transceiver 810, a memory 820, and a processor 830. The transceiver 810, the memory 820, and the processor 830 of the base station may operate according to a communication method of the base station described above. However, the components of the base station are not limited thereto. For example, the base station may include more or fewer components than those described above. In addition, the processor 830, the transceiver 810, and the memory 820 may be implemented as a single chip. Also, the processor 830 may include at least one processor. Furthermore, the base station of FIG. 8 corresponds to the gNB 202 of the FIG. 2.

The transceiver 810 collectively refers to a base station receiver and a base station transmitter, and may transmit/receive a signal to/from a terminal(UE) or a network entity. The signal transmitted or received to or from the terminal or a network entity may include control information and data. The transceiver 810 may include a RF transmitter for up-converting and amplifying a frequency of a transmitted signal, and a RF receiver for amplifying low-noise and down-converting a frequency of a received signal. However, this is only an example of the transceiver 810 and components of the transceiver 810 are not limited to the RF transmitter and the RF receiver.

Also, the transceiver 810 may receive and output, to the processor 830, a signal through a wireless channel, and transmit a signal output from the processor 830 through the wireless channel.

The memory 820 may store a program and data required for operations of the base station. Also, the memory 820 may store control information or data included in a signal obtained by the base station. The memory 820 may be a storage medium, such as read-only memory (ROM), random access memory (RAM), a hard disk, a CD-ROM, and a DVD, or a combination of storage media.

The processor 830 may control a series of processes such that the base station operates as described above. For example, the transceiver 810 may receive a data signal including a control signal transmitted by the terminal, and the processor 830 may determine a result of receiving the control signal and the data signal transmitted by the terminal.

FIG. 9 illustrates a structure of a UE according to an embodiment of the disclosure.

As shown in FIG. 9, the UE according to an embodiment may include a transceiver 910, a memory 920, and a processor 930. The transceiver 910, the memory 920, and the processor 930 of the UE may operate according to a communication method of the UE described above. However, the components of the UE are not limited thereto. For example, the UE may include more or fewer components than those described above. In addition, the processor 930, the transceiver 910, and the memory 920 may be implemented as a single chip. Also, the processor 930 may include at least one processor. Furthermore, the UE of FIG. 9 corresponds to the UE 203 of the FIG. 2.

The transceiver 910 collectively refers to a UE receiver and a UE transmitter, and may transmit/receive a signal to/from a base station or a network entity. The signal transmitted or received to or from the base station or a network entity may include control information and data. The transceiver 910 may include a RF transmitter for up-converting and amplifying a frequency of a transmitted signal, and a RF receiver for amplifying low-noise and down-converting a frequency of a received signal. However, this is only an example of the transceiver 910 and components of the transceiver 910 are not limited to the RF transmitter and the RF receiver.

Also, the transceiver 910 may receive and output, to the processor 930, a signal through a wireless channel, and transmit a signal output from the processor 930 through the wireless channel.

The memory 920 may store a program and data required for operations of the UE. Also, the memory 920 may store control information or data included in a signal obtained by the UE. The memory 920 may be a storage medium, such as read-only memory (ROM), random access memory (RAM), a hard disk, a CD-ROM, and a DVD, or a combination of storage media.

The processor 930 may control a series of processes such that the UE operates as described above. For example, the transceiver 910 may receive a data signal including a control signal transmitted by the base station or the network entity, and the processor 930 may determine a result of receiving the control signal and the data signal transmitted by the base station or the network entity.

Those skilled in the art will understand that the various illustrative logical blocks, modules, circuits, and steps described in this application may be implemented as hardware, software, or a combination of both. To clearly illustrate this interchangeability between hardware and software, various illustrative components, blocks, modules, circuits, and steps are generally described above in the form of their functional sets. Whether such function sets are implemented as hardware or software depends on the specific application and the design constraints imposed on the overall system. Technicians may implement the described functional sets in different ways for each specific application, but such design decisions should not be interpreted as causing a departure from the scope of this application.

In the above-described embodiments of the disclosure, all operations and messages may be selectively performed or may be omitted. In addition, the operations in each embodiment do not need to be performed sequentially, and the order of operations may vary. Messages do not need to be transmitted in order, and the transmission order of messages may change. Each operation and transfer of each message can be performed independently.

Although the figures illustrate different examples of user equipment, various changes may be made to the figures. For example, the user equipment can include any number of each component in any suitable arrangement. In general, the figures do not limit the scope of this disclosure to any particular configuration(s). Moreover, while figures illustrate operational environments in which various user equipment features disclosed in this patent document can be used, these features can be used in any other suitable system.

The various illustrative logic blocks, modules, and circuits described in this application may be implemented or performed by a general purpose processor, a Digital Signal Processor (DSP), an Application Specific Integrated Circuit (ASIC), a Field Programmable Gate Array (FPGA) or other programmable logic devices, discrete gates or transistor logics, discrete hardware components, or any combination thereof designed to perform the functions described herein. The general purpose processor may be a microprocessor, but in an alternative, the processor may be any conventional processor, controller, microcontroller, or state machine. The processor may also be implemented as a combination of computing devices, such as a combination of a DSP and a microprocessor, a plurality of microprocessors, one or more microprocessors cooperating with a DSP core, or any other such configuration.

The steps of the method or algorithm described in this application may be embodied directly in hardware, in a software module executed by a processor, or in a combination thereof. The software module may reside in RAM memory, flash memory, ROM memory, EPROM memory, EEPROM memory, register, hard disk, removable disk, or any other form of storage medium known in the art. A storage medium is coupled to a processor to enable the processor to read and write information from/to the storage media. In an alternative, the storage medium may be integrated into the processor. The processor and the storage medium may reside in an ASIC. The ASIC may reside in a user terminal. In an alternative, the processor and the storage medium may reside in the user terminal as discrete components.

In one or more designs, the functions may be implemented in hardware, software, firmware, or any combination thereof. If implemented in software, each function may be stored as one or more pieces of instructions or codes on a computer-readable medium or delivered through it. The computer-readable medium includes both a computer storage medium and a communication medium, the latter including any medium that facilitates the transfer of computer programs from one place to another. The storage medium may be any available medium that can be accessed by a general purpose or special purpose computer.

While the disclosure has been shown and described with reference to various embodiments thereof, it will be understood by those skilled in the art that various changes in form and details may be made therein without departing from the scope of the disclosure as defined by the appended claims and their equivalents.

## Claims

1. A method performed by a base station in a wireless communication system, the method comprising:
fragmenting a digital signature in a signalling message into a plurality of fragments,
wherein a first fragment included in the plurality of fragments comprises a public validation token, PVT, value of an elliptic curve-based signature for identity based encryption, ECCSI,
wherein the PVT value is applicable to a radio access network, RAN, based notification area, RNA,
wherein a second fragment included in the plurality of fragments comprises r and s signature values, and
wherein the second fragment is unique per cell.

2. The method of claim 1, wherein the method further comprises:
transmitting, to an access and mobility management function, AMF entity, the PVT request in an initial user equipment, UE, message,
wherein the first fragment is broadcasted in a non-access stratum, NAS, message.

3. The method of claim 1,
wherein the second fragment is broadcasted in a radio resource control, RRC, message, and
wherein the RRC message includes a master information block, MIB, and a system information block, SIB, wherein the SIB comprises the r and s values.

4. The method of claim 1, further comprising:
broadcasting the second fragment of the digital signature for every period or at short intervals in a SIB broadcast message; and
broadcasting the digital signature on receiving a request from the UE, or at long intervals in a SIB broadcast message.

5. A method performed by a user equipment, UE, in a wireless communication system, the method comprising:
acquiring master information block, MIB and system information block, SIB, wherein the SIB comprises r and s values; and
holding a verification of the MIB and the SIB, if a public validation token, PVT, is not available at the UE,
wherein a digital signature in a signalling message is fragmented into a plurality of fragments,
wherein a first fragment included in the plurality of fragments comprises the PVT value of an elliptic curve-based signature for identity based encryption, ECCSI,
wherein the PVT value is applicable to a radio access network, RAN, based notification area, RNA,
wherein a second fragment included in the plurality of fragments comprises the r and s signature values, and
wherein the second fragment is unique per cell.

6. The method of claim 5, further comprising:
transmitting, to a base station, a radio resource control, RRC, message setup complete message with a registration request in a dedicated non-access stratum, NAS, message;
receiving, from access and mobility management function, AMF, entity, a NAS message via the base station; and
verifying the MIB and the SIB by constructing the digital signature from the r and s values and the PVT, on the PVT being at least one of already being stored in the UE,
wherein the registration request message comprises a PVT request,
wherein the NAS message comprises the PVT, and is at least one of a registration accept message, a registration reject message, a NAS security mode command message, or a DL NAS transport message, and
wherein the first fragment is broadcasted in the NAS message.

7. The method of claim 5, wherein the second fragment is broadcasted in the RRC message, and
wherein the RRC message includes the MIB and the SIB.

8. The method of claim 5, wherein the second fragment of the digital signature for every period or at short intervals in a SIB broadcast message is broadcasted from the base station, and
wherein the digital signature on receiving a request from the UE, or at long intervals in a SIB broadcast message is broadcasted from the base station.

9. A base station in a wireless communication system, the base station comprising:
a transceiver; and
at least one processor coupled with the transceiver and configured to:
fragment a digital signature in a signalling message into a plurality of fragments,
wherein a first fragment included in the plurality of fragments comprises a public validation token, PVT, value of an elliptic curve-based signature for identity based encryption, ECCSI,
wherein the PVT value is applicable to a radio access network, RAN, based notification area, RNA,
wherein a second fragment included in the plurality of fragments comprises r and s signature values, and
wherein the second fragment is unique per cell.

10. The base station of claim 9, wherein the at least one processor is further configured to:
transmit, to an access and mobility management function, AMF, entity, the PVT request in an initial user equipment, UE, message,
wherein the first fragment is broadcasted in a non-access stratum, NAS, message.

11. The base station of claim 9,
wherein the second fragment is broadcasted in a radio resource control, RRC, message, and
wherein the RRC message includes a master information block, MIB, and a system information block, SIB, wherein the SIB comprises the r and s values.

12. The base station of claim 9, wherein the at least one processor is further configured to:
broadcast the second fragment of the digital signature for every period or at short intervals in a SIB broadcast message, and
broadcast the digital signature on receiving a request from the UE, or at long intervals in a SIB broadcast message.

13. A user equipment, UE, in a wireless communication system, the UE comprising:
a transceiver; and
at least one processor coupled with the transceiver and configured to:
acquire master information block, MIB, and system information block, SIB, wherein the SIB comprises r and s values, and
hold a verification of the MIB and the SIB, if a public validation token, PVT, is not available at the UE,
wherein a digital signature in a signalling message is fragmented into a plurality of fragments,
wherein a first fragment included in the plurality of fragments comprises the PVT value of an elliptic curve-based signature for identity based encryption, ECCSI,
wherein the PVT value is applicable to a radio access network, RAN, based notification area, RNA,
wherein a second fragment included in the plurality of fragments comprises the r and s signature values, and
wherein the second fragment is unique per cell.

14. The UE of claim 13, wherein the at least one processor is further configured to:
transmit, to a base station, a radio resource control, RRC, message setup complete message with a registration request in a dedicated non-access stratum, NAS, message,
receive, from access and mobility management function, AMF, entity, a NAS message via the base station, and
verify the MIB and the SIB by constructing the digital signature from the r and s values and the PVT, on the PVT being at least one of already being stored in the UE,
wherein the registration request message comprises a PVT request,
wherein the NAS message comprises the PVT, and is at least one of a registration accept message, a registration reject message, a NAS security mode command message, or a DL NAS transport message, and
wherein the first fragment is broadcasted in the NAS message.

15. The UE of claim 13, wherein the second fragment is broadcasted in the RRC message, and
wherein the RRC message includes the MIB and the SIB.

## Patentansprüche

1. Verfahren, das von einer Basisstation in einem drahtlosen Kommunikationssystem ausgeführt wird, wobei das Verfahren Folgendes umfasst:
Fragmentieren einer digitalen Signatur in einer Signalisierungsnachricht in eine Vielzahl von Fragmenten,
wobei ein erstes Fragment, das in der Vielzahl von Fragmenten enthalten ist, einen PVT(öffentliches Validierungstoken)-Wert einer auf elliptischen Kurven basierenden Signatur für identitätsbasierte Verschlüsselung, ECCSI, umfasst,
wobei der PVT-Wert auf einen Funkzugangsnetz(RAN)-basierten Benachrichtigungsbereich, RNA, angewendet werden kann,
wobei ein zweites Fragment, das in der Vielzahl von Fragmenten enthalten ist, die Signaturwerte r und s umfasst, und
wobei das zweite Fragment pro Zelle einzigartig ist.

2. Verfahren nach Anspruch 1, wobei das Verfahren ferner Folgendes umfasst:
Übertragen der PVT-Anforderung in einer ersten Benutzergerät(UE)-Nachricht an eine Zugriffs- und Mobilitätsmanagementfunktions(AMF)-Entität,
wobei das erste Fragment in einer Non-Access Stratum(NAS)-Nachricht übertragen wird.

3. Verfahren nach Anspruch 1,
wobei das zweite Fragment in einer Radio Resource Control(RRC)-Nachricht übertragen wird, und
wobei die RRC-Nachricht einen Master-Informationsblock, MIB, und einen Systeminformationsblock, SIB, enthält, wobei der SIB die Werte r und s umfasst.

4. Verfahren nach Anspruch 1, das ferner Folgendes umfasst:
Übertragen des zweiten Fragments der digitalen Signatur für jeden Zeitraum oder in kurzen Abständen in einer SIB-Broadcast-Nachricht; und
Übertragen der digitalen Signatur beim Empfangen einer Anforderung von dem UE oder in langen Abständen in einer SIB-Broadcast-Nachricht.

5. Verfahren, das von einem Benutzergerät, UE, in einem drahtlosen Kommunikationssystem ausgeführt wird, wobei das Verfahren Folgendes umfasst:
Erwerben des Master-Informationsblocks, MIB, und des Systeminformationsblocks, SIB, wobei der SIB die Werte r und s umfasst; und
Durchführen einer Überprüfung des MIB und des SIB, falls kein öffentliches Validierungstoken, PVT, auf dem UE verfügbar ist,
wobei eine digitale Signatur in einer Signalisierungsnachricht in eine Vielzahl von Fragmenten fragmentiert wird,
wobei ein erstes Fragment, das in der Vielzahl von Fragmenten enthalten ist, den PVT-Wert einer auf elliptischen Kurven basierenden Signatur für identitätsbasierte Verschlüsselung, ECCSI, umfasst,
wobei der PVT-Wert auf einen Funkzugangsnetz(RAN)-basierten Benachrichtigungsbereich, RNA, angewendet werden kann,
wobei ein zweites Fragment, das in der Vielzahl von Fragmenten enthalten ist, die Signaturwerte r und s umfasst, und
wobei das zweite Fragment pro Zelle einzigartig ist.

6. Verfahren nach Anspruch 5, das ferner Folgendes umfasst:
Übertragen einer Radio Resource Control(RRC)-Nachricht "Nachrichten-Setup abgeschlossen" mit einer Registrierungsanforderung in einer dedizierten Non-Access Stratum(NAS)-Nachricht an eine Basisstation;
Empfangen einer NAS-Nachricht über die Basisstation von der Zugriffs- und Mobilitätsmanagementfunktions(AMF)-Entität; und
Überprüfen des MIB und des SIB durch Konstruieren der digitalen Signatur aus den Werten r und s und dem PVT, wobei das PVT mindestens eines der bereits im UE gespeicherten ist,
wobei die Registrierungsanforderungsnachricht eine PVT-Anforderung enthält,
wobei die NAS-Nachricht das PVT umfasst und eine Registrierungsbestätigungsnachricht, eine Registrierungsablehnungsnachricht, eine NAS-Sicherheitsmodusbefehlsnachricht und/oder eine DL-NAS-Transportnachricht ist, und
wobei das erste Fragment in der NAS-Nachricht übertragen wird.

7. Verfahren nach Anspruch 5, wobei das zweite Fragment in der RRC-Nachricht übertragen wird, und
wobei die RRC-Nachricht den MIB und den SIB enthält.

8. Verfahren nach Anspruch 5, wobei das zweite Fragment der digitalen Signatur für jeden Zeitraum oder in kurzen Abständen in einer SIB-Broadcast-Nachricht von der Basisstation übertragen wird, und
wobei die digitale Signatur beim Empfangen einer Anforderung von dem UE oder in langen Abständen in einer SIB-Broadcast-Nachricht von der Basisstation übertragen wird.

9. Basisstation in einem drahtlosen Kommunikationssystem, wobei die Basisstation Folgendes umfasst:
einen Transceiver; und
mindestens einen Prozessor, der mit dem Transceiver gekoppelt und zu Folgendem konfiguriert ist:
Fragmentieren einer digitalen Signatur in einer Signalisierungsnachricht in eine Vielzahl von Fragmenten,
wobei ein erstes Fragment, das in der Vielzahl von Fragmenten enthalten ist, einen PVT(öffentliches Validierungstoken)-Wert einer auf elliptischen Kurven basierenden Signatur für identitätsbasierte Verschlüsselung, ECCSI, umfasst,
wobei der PVT-Wert auf einen Funkzugangsnetz(RAN)-basierten Benachrichtigungsbereich, RNA, angewendet werden kann,
wobei ein zweites Fragment, das in der Vielzahl von Fragmenten enthalten ist, die Signaturwerte r und s umfasst, und
wobei das zweite Fragment pro Zelle einzigartig ist.

10. Basisstation nach Anspruch 9, wobei der mindestens eine Prozessor ferner zu Folgendem konfiguriert ist:
Übertragen der PVT-Anforderung in einer ersten Benutzergerät(UE)-Nachricht an eine Zugriffs- und Mobilitätsmanagementfunktions(AMF)-Entität,
wobei das erste Fragment in einer Non-Access Stratum(NAS)-Nachricht übertragen wird.

11. Basisstation nach Anspruch 9,
wobei das zweite Fragment in einer Radio Resource Control(RRC)-Nachricht übertragen wird, und
wobei die RRC-Nachricht einen Master-Informationsblock, MIB, und einen Systeminformationsblock, SIB, enthält, wobei der SIB die Werte r und s umfasst.

12. Basisstation nach Anspruch 9, wobei der mindestens eine Prozessor ferner zu Folgendem konfiguriert ist:
Übertragen des zweiten Fragments der digitalen Signatur für jeden Zeitraum oder in kurzen Abständen in einer SIB-Broadcast-Nachricht, und
Übertragen der digitalen Signatur beim Empfangen einer Anforderung von dem UE oder in langen Abständen in einer SIB-Broadcast-Nachricht.

13. Benutzergerät, UE, in einem drahtlosen Kommunikationssystem, wobei das UE Folgendes umfasst:
einen Transceiver; und
mindestens einen Prozessor, der mit dem Transceiver gekoppelt und zu Folgendem konfiguriert ist:
Erwerben eines Master-Informationsblocks, MIB, und eines Systeminformationsblocks, SIB, wobei der SIB die Werte r und s umfasst, und
Durchführen einer Überprüfung des MIB und des SIB, falls kein öffentliches Validierungstoken, PVT, auf dem UE verfügbar ist,
wobei eine digitale Signatur in einer Signalisierungsnachricht in eine Vielzahl von Fragmenten fragmentiert wird,
wobei ein erstes Fragment, das in der Vielzahl von Fragmenten enthalten ist, den PVT-Wert einer auf elliptischen Kurven basierenden Signatur für identitätsbasierte Verschlüsselung, ECCSI, umfasst,
wobei der PVT-Wert auf einen Funkzugangsnetz(RAN)-basierten Benachrichtigungsbereich, RNA, angewendet werden kann,
wobei ein zweites Fragment, das in der Vielzahl von Fragmenten enthalten ist, die Signaturwerte r und s umfasst, und
wobei das zweite Fragment pro Zelle einzigartig ist.

14. UE nach Anspruch 13, wobei der mindestens eine Prozessor ferner zu Folgendem konfiguriert ist:
Übertragen einer Radio Resource Control(RRC)-Nachricht "Nachrichten-Setup abgeschlossen" mit einer Registrierungsanforderung in einer dedizierten Non-Access Stratum(NAS)-Nachricht an eine Basisstation,
Empfangen einer NAS-Nachricht über die Basisstation von der Zugriffs- und Mobilitätsmanagementfunktions(AMF)-Entität, und
Überprüfen des MIB und des SIB durch Konstruieren der digitalen Signatur aus den Werten r und s und dem PVT, wobei das PVT mindestens eines der bereits in dem UE gespeicherten ist,
wobei die Registrierungsanforderung eine PVT-Anforderung enthält,
wobei die NAS-Nachricht das PVT umfasst und eine Registrierungsbestätigungsnachricht, eine Registrierungsablehnungsnachricht, eine NAS-Sicherheitsmodusbefehlsnachricht und/oder eine DL-NAS-Transportnachricht ist, und
wobei das erste Fragment in der NAS-Nachricht übertragen wird.

15. UE nach Anspruch 13, wobei das zweite Fragment in der RRC-Nachricht übertragen wird, und
wobei die RRC-Nachricht den MIB und den SIB enthält.

## Revendications

1. Procédé exécuté par une station de base dans un système de communication sans fil, le procédé comprenant :
fragmenter une signature numérique dans un message de signalisation en une pluralité de fragments,
où un premier fragment inclus dans la pluralité de fragments comprend une valeur de jeton de validation public, PVT, d'une signature à courbe elliptique pour la cryptographie fondée sur l'identité, ECCSI,
où la valeur de PVT est applicable à une zone de notification fondée sur un réseau d'accès radioélectrique, RAN, RNA,
où un deuxième fragment inclus dans la pluralité de fragments comprend des valeurs de signature r et s, et
où le deuxième fragment est unique par cellule.

2. Procédé selon la revendication 1, où le procédé comprend en outre :
transmettre, à une entité de fonction de gestion de l'accès et de la mobilité, AMF, la requête de PVT dans un message initial d'équipement utilisateur, UE,
où le premier fragment est diffusé dans un message de strate de non-accès, NAS.

3. Procédé selon la revendication 1,
où le deuxième fragment est diffusé dans un message de contrôle des ressources radio, RRC, et
où le message RRC inclut un bloc d'informations maître, MIB, et un bloc d'informations système, SIB, où le SIB comprend les valeurs r et s.

4. Procédé selon la revendication 1, comprenant en outre :
diffuser le deuxième fragment de la signature numérique pour chaque période ou à de courts intervalles dans un message de diffusion SIB ; et
diffuser la signature numérique lors de la réception d'une requête provenant de l'UE, ou à de longs intervalles dans un message de diffusion SIB.

5. Procédé exécuté par un équipement utilisateur, UE, dans un système de communication sans fil, le procédé comprenant :
acquérir un bloc d'informations maître, MIB et un bloc d'informations système, SIB, où le SIB comprend des valeurs r et s ; et
effectuer une vérification du MIB et du SIB, si un jeton de validation public, PVT, n'est pas disponible au niveau de l'UE,
où une signature numérique dans un message de signalisation est fragmenté en une pluralité de fragments,
où un premier fragment inclus dans la pluralité de fragments comprend la valeur de PVT d'une signature à courbe elliptique pour la cryptographie fondée sur l'identité, ECCSI,
où la valeur de PVT est applicable à une zone de notification fondée sur un réseau d'accès radioélectrique, RAN, RNA,
où un deuxième fragment inclus dans la pluralité de fragments comprend les valeurs de signature r et s, et
où le deuxième fragment est unique par cellule.

6. Procédé selon la revendication 5, comprenant en outre :
transmettre, à une station de base, un message de fin de configuration du contrôle des ressources radio, RRC, avec une requête d'enregistrement dans un message de strate de non-accès, NAS, dédié ;
recevoir, d'une entité de fonction de gestion de l'accès et de la mobilité, AMF, un message NAS via la station de base ; et
vérifier le MIB et le SIB par la construction de la signature numérique à partir des valeurs r et s et du PVT, le PVT étant au moins l'un de ceux déjà stockés dans l'UE,
où le message de requête d'enregistrement comprend une requête de PVT,
où le message NAS comprend le PVT, et est au moins l'un des suivants : un message d'acceptation d'enregistrement, un message de refus d'enregistrement, un message de commande de mode de sécurité NAS, ou un message de transport NAS DL, et
où le premier fragment est diffusé dans le message NAS.

7. Procédé selon la revendication 5, où le deuxième fragment est diffusé dans le message RRC, et
où le message RRC inclut le MIB et le SIB.

8. Procédé selon la revendication 5, où le deuxième fragment de la signature numérique pour chaque période ou à de courts intervalles dans un message de diffusion SIB est diffusé depuis la station de base, et
où la signature numérique lors de la réception d'une requête provenant de l'UE, ou à de longs intervalles dans un message de diffusion SIB est diffusé depuis la station de base.

9. Station de base dans un système de communication sans fil, la station de base comprenant :
un émetteur-récepteur ; et
au moins un processeur couplé à l'émetteur-récepteur et configuré pour :
fragmenter une signature numérique dans un message de signalisation en une pluralité de fragments,
où un premier fragment inclus dans la pluralité de fragments comprend une valeur de jeton de validation public, PVT, d'une signature à courbe elliptique pour la cryptographie fondée sur l'identité, ECCSI,
où la valeur de PVT est applicable à une zone de notification fondée sur un réseau d'accès radioélectrique, RAN, RNA,
où un deuxième fragment inclus dans la pluralité de fragments comprend des valeurs de signature r et s, et
où le deuxième fragment est unique par cellule.

10. Station de base selon la revendication 9, où l'au moins un processeur est en outre configuré pour :
transmettre, à une entité de fonction de gestion de l'accès et de la mobilité, AMF, la requête de PVT dans un message initial d'équipement utilisateur, UE,
où le premier fragment est diffusé dans un message de strate de non-accès, NAS.

11. Station de base selon la revendication 9,
où le deuxième fragment est diffusé dans un message de contrôle des ressources radio, RRC, et
où le message RRC inclut un bloc d'informations maître, MIB, et un bloc d'informations système, SIB, où le SIB comprend les valeurs r et s.

12. Station de base selon la revendication 9, où l'au moins un processeur est en outre configuré pour :
diffuser le deuxième fragment de la signature numérique pour chaque période ou à de courts intervalles dans un message de diffusion SIB, et
diffuser la signature numérique lors de la réception d'une requête provenant de l'UE, ou à de longs intervalles dans un message de diffusion SIB.

13. Équipement utilisateur, UE, dans un système de communication sans fil, l'UE comprenant :
un émetteur-récepteur ; et
au moins un processeur couplé à l'émetteur-récepteur et configuré pour :
acquérir un bloc d'informations maître, MIB et un bloc d'informations système, SIB, où le SIB comprend des valeurs r et s, et
effectuer une vérification du MIB et du SIB, si un jeton de validation public, PVT, n'est pas disponible au niveau de l'UE,
où une signature numérique dans un message de signalisation est fragmenté en une pluralité de fragments,
où un premier fragment inclus dans la pluralité de fragments comprend la valeur de PVT d'une signature à courbe elliptique pour la cryptographie fondée sur l'identité, ECCSI,
où la valeur de PVT est applicable à une zone de notification fondée sur un réseau d'accès radioélectrique, RAN, RNA,
où un deuxième fragment inclus dans la pluralité de fragments comprend les valeurs de signature r et s, et
où le deuxième fragment est unique par cellule.

14. UE selon la revendication 13, où l'au moins un processeur est en outre configuré pour :
transmettre, à une station de base, un message de fin de configuration du contrôle des ressources radio, RRC, avec une requête d'enregistrement dans un message de strate de non-accès, NAS, dédié,
recevoir, d'une entité de fonction de gestion de l'accès et de la mobilité, AMF, un message NAS via la station de base, et
vérifier le MIB et le SIB par la construction de la signature numérique à partir des valeurs r et s et du PVT, le PVT étant au moins l'un de ceux déjà stockés dans l'UE,
où le message de requête d'enregistrement comprend une requête de PVT,
où le message NAS comprend le PVT, et est au moins l'un des suivants : un message d'acceptation d'enregistrement, un message de refus d'enregistrement, un message de commande de mode de sécurité NAS, ou un message de transport NAS DL, et
où le premier fragment est diffusé dans le message NAS.

15. UE selon la revendication 13, où le deuxième fragment est diffusé dans le message RRC, et
où le message RRC inclut le MIB et le SIB.
